# EUROPÄISCHE PATENTSCHRIFT

(11) **EP 0 760 132 B1**
(45) Veröffentlichungstag und Bekanntmachung des Hinweises auf die Patenterteilung: **17.10.2001**
(21) Anmeldenummer: 96902235.9
(22) Anmeldetag: 16.02.1996
(51) Int. Cl.: G06F 11/14

(54) **SCHALTUNG ZUM BETREIBEN VON RECHENBAUSTEINEN, INSBESONDERE MIKROPROZESSOREN**
CIRCUIT FOR DRIVING COMPUTER MODULES, IN PARTICULAR MICROPROCESSORS
CIRCUIT D'EXPLOITATION DE MODULES INFORMATIQUES, NOTAMMENT DE MICROPROCESSEURS

(30) Priorität: 14.03.1995 DE 19508793
(43) Veröffentlichungstag der Anmeldung: 05.03.1997
(73) Patentinhaber: ROBERT BOSCH GMBH, 70442 Stuttgart (DE)
(72) Erfinder: KNAB, Norbert, D-77767 Appenweier (DE); PRÜSSEL, Holger, D-77830 Bühlertal (DE)
(86) Internationale Anmeldenummer: DE9600242
(87) Internationale Veröffentlichungsnummer: WO9628780

(56) Entgegenhaltungen:
- EP-A- 0 125 682
- EP-A- 0 410 030
- WO-A-85/02475

## Beschreibung

### Stand der Technik

Die Erfindung geht aus von einer Schaltung zum Betreiben von Rechenbausteinen, insbesondere Mikroprozessoren, nach der Gattung des unabhängigen Anspruchs. Aus der EP-A 163 670 ist eine gattungsgemäße Vorrichtung bekannt, die zwei Überwachungseinrichtungen für programmgesteuerte Vorrichtungen enthält, die kurzzeitige Störungen oder Systemausfälle erkennen und darauf ein Resetsignal an den Mikroprozessor abgeben. Vorgesehen ist ein unterschiedlicher Programmablauf nach einem aufgetretenen Reset-Signal, der in Abhängigkeit von einem Vergleichssignal festgelegt wird. Das Vergleichssignal gibt an, daß eine in einem flüchtigen Speicher hinterlegte digitale Zahl zumindest teilweise übereinstimmt mit einer in einem Festwertspeicher hinterlegten digitalen Zahl. Bei einer weitgehenden Übereinstimmung wird angenommen, daß das Resetsignal von einer Überwachungseinrichtung veranlaßt wurde, die das Resetsignal beispielsweise aufgrund einer hochfrequente Störung abgegeben hat. Wird dagegen festgestellt, daß beiden digitalen Zahlen kein gemeinsames Muster aufweisen, so wird angenommen, daß das Resetsignal von einer anderen Überwachungseinrichtung veranlaßt wurde, die ein Resetsignal beispielsweise bei einem Einschalten der Vorrichtung abgibt. Der aufgrund des Vergleichs unterschiedliche Programmablauf ermöglicht gegebenenfalls eine erhebliche Verkürzung der Wiederanlaufzeit eines Programms dadurch, daß beispielsweise eine vollständige Initialisierung der Register und beispielsweise ein Neuladen des Benutzerprogramms oder sonstige Vorgänge nicht durchgeführt zu werden brauchen.

### Vorteile der Erfindung

Der erfindungsgemäßen Schaltung zum Betreiben von Rechenbausteinen, insbesondere Mikroprozessoren, weist den Vorteil auf, daß der unterschiedliche Programmablauf in Abhängigkeit von einem Zustand einer Einrichtung erfolgt, die von dem Rechenbaustein gesteuert ist. Die Berücksichtigung des Zustands der Einrichtung ermöglicht eine Unterscheidung zwischen einem Resetsignal, das beispielsweise aufgrund von elektromagnetischen Störungen aufgetreten ist von einem anderen Resetsignal. Durch die Berücksichtigung des Zustands der Einrichtung werden insbesondere unerwünschte Betriebssituationen vermieden.

Vorteilhafte Weiterbildungen und Ausgestaltungen der erfindungsgemäßen Schaltung zum Betreiben von Rechenbausteinen, insbesondere Mikroprozessoren, ergeben sich aus abhängigen Ansprüchen.

Die erfindungsgemäße Schaltung eignet sich insbesondere für einen Rechenbaustein, der einen elektromotorisch betätigten Verstellantrieb steuert. Das dem Zustand der Einrichtung entsprechende Signal, das ein Vergleicher mit wenigstens einem vorgegebenen Schwellenwert vergleicht, ist bei einem Verstellantrieb vorzugsweise die Position des zu verstellenden Teils. Bei einem elektromotorisch betätigten Verstellantrieb muß insbesondere beim Erreichen von mechanischen Endanschlägen, die gegebenenfalls zu einem Blockieren des Elektromotors führen, mit erhöhten elektromagnetischen Störungen durch den erhöhten Motorstrom gerechnet werden. In Kenntnis der Position des zu verstellenden Teils kann bei einem Auftreten des Resetsignals mit dem Vergleicher entschieden werden, ob das Programm zu beispielsweise einer vollständigen Initialisierung oder zu einem erheblich verkürzten Wiederaufnahmepunkt innerhalb des Programms verzweigen soll.

Eine Initialisierung sieht beispielsweise einen Kalibrierlauf des Verstellantriebs vor, wobei ein inkrementelles Positionsmeßsystem die Endanschläge des Verstellantriebs lernt. Wird erkannt, daß das Resetsignal . aufgrund des Erreichens eines der Endanschläge aufgetreten ist, so kann vorzugsweise der Kalibrierlauf entfallen.

Die erfindungsgemäße Schaltung eignet sich insbesondere zum Betreiben von Rechenbausteinen, die einen Verstellantrieb steuern, der in einem Kraftfahrzeug angeordnet ist. Verstellantriebe werden für unterschiedliche Karosserieteile wie beispielsweise Sitz-/Spiegelverstellung, Fensterheber und beispielsweise Schiebedächer eingesetzt. Eine andere Verwendung ist bei Kraftstoffzumessungssystemen, insbesondere einer elektromotorisch betätigten Drosselklappenverstellung im Kraftstoffzumessungssystem einer Brennkraftmaschine gegeben. Bei derartigen Verstellantrieben ist es besonders vorteilhaft, wenn beispielsweise der Kalibrierlauf nicht bei jedem Auftreten eines Resetsignals durchgeführt wird.

Eine Ausgestaltung der erfindungsgemäßen Schaltung sieht vor, daß der Programmablauf zusätzlich von der Anzahl der aufgetretenen Resetsignale festgelegt ist. Mit dieser Maßnahme wird sichergestellt, daß Resetsignale, die aufgrund von elektromagnetischen Störungen aufgetreten sind, nach einer vorgegebenen Anzahl unbedingt zu einem Programmablauf führen, der beispielsweise den bereits erwähnten Kalibrierlauf einbezieht.

Weitere vorteilhafte Ausgestaltungen und Weiterbildungen der erfindungsgemäßen Schaltung zum Betreiben von Rechenbausteinen, insbesondere Mikroprozessoren, ergeben sich aus weiteren abhängigen Anspüchen und aus der folgenden Beschreibung.

### Zeichnung

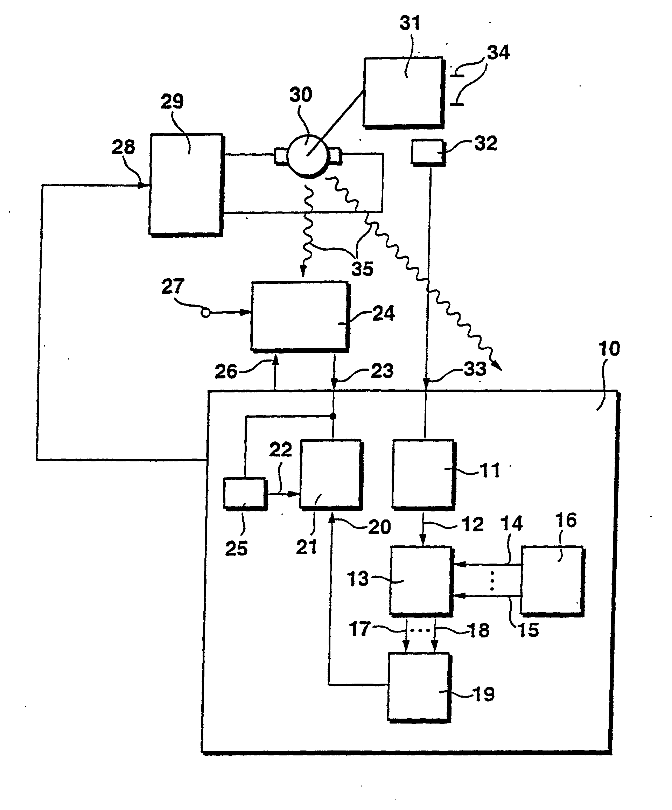

Ein Blockschaltbild einer erfindungsgemäßen Schaltung zum Betreiben von Rechenbausteinen, insbesondere Mikroprozessoren, ist in der Figur gezeigt.

Die Figur zeigt einen Rechenbaustein 10, der im folgenden als Mikroprozessor bezeichnet wird. Der Mikroprozessor 10 enthält eine Positionsermittlung 11, die ein Positionssignal 12 an einen Vergleicher 13 abgibt, der das Positionssignal 12 mit wenigstens einem Schwellenwert 14, 15 vergleicht, der von einem Schwellenwertgeber 16 bereitgestellt wird. Der Vergleicher 13 stellt in Abhängigkeit vom Vergleichsergebnis wenigstens ein Vergleichssignal 17, 18 bereit, das in einer Programmauswahl 19 einen bestimmten Programmablauf festlegt. Die Programmauswahl 19 gibt ein erstes Auswahlsignal 20 an eine Resetverwaltung 21 ab, der weiterhin ein zweites Auswahlsignal 22 sowie ein Resetsignal 23 zugeleitet sind.

Das Resetsignal 23 stellt eine Überwachungseinrichtung 24 bereit, wobei das Resetsignal 23 weiterhin einer Zähleranordnung 25 zugeführt ist, die das zweite Auswahlsignal 22 abgibt. Die Überwachungseinrichtung 24 stellt das Resetsignal 23 in Abhängigkeit von einem ersten und zweiten Eingangssignal 26, 27 bereit. Das erste Eingangssignal 26 gibt der Mikroprozessor 10 an die Überwachungseinrichtung 24 ab. Das zweite Eingangssignal 27 ist ein externes Signal.

Der Mikroprozessor 10 gibt ein Ausgangssignal an eine Motortreiberschaltung 29 ab, an der ein Elektromotor 30 angeschlossen ist, der einen Verstellantrieb 31 betätigt. Die Position des Verstellantriebs erfaßt ein Positionssensor 32, der ein inkrementelles Positionssignal 33 an die Positionsermittlung 11 abgibt. Der Verstellantrieb 31 kann zwischen Endanschlägen 34 bewegt werden.

Der den Elektromotor 30 enthaltende Stromkreis sowie insbesondere der Elektromotor 30 selbst sind Quellen von elektromagnetischen Störungen 35, die auf den Mikroprozessor 10 und auf die Überwachungseinrichtung 24 einwirken.

Die erfindungsgemäße Schaltung zum Betreiben von Rechenbausteinen, insbesondere Mikroprozessoren 10, arbeitet folgendermaßen:

Im gezeigten Ausführungsbeispiel steuert der Mikroprozessor 10 den Verstellantrieb 31, der von dem Elektromotor 30 betätigt wird. Die Steuerung des Elektromotors 30 erfolgt über das Ausgangssignal 28, das der Motortreiberschaltung 29 zugeleitet ist. Die Motortreiberschaltung 29 legt in Abhängigkeit vom Ausgangssignal 28 den Linkslauf oder Rechtslauf des Elektromotors 30 fest. Der Verstellantrieb ist beispielsweise in einem Kraftfahrzeug angeordnet.

Verstellantriebe in der Karosserie eines Kraftfahrzeuges sind beispielsweise eine Sitz-/Spiegelverstellung, ein Fensterheber oder beispielsweise ein Schiebedach. Weitere Verstellantriebe in Kraftfahrzeugen sind bei der Kraftstoffzumessung vorhanden.

Beispielsweise kann eine Drosselklappe, die in einer Kraftstoffzumessung einer Brennkraftmaschine angeordnet ist, Teil eines Verstellantriebs sein.

Die erfindungsgemäße Schaltung ist aber keinesfalls auf einen Verstellantrieb oder auf die Verwendung des Verstellantriebs in einem Kraftfahrzeug eingeschränkt. Die erfindungsgemäße Schaltung ist allgemein abgestellt auf Einrichtungen 31, die den Mikroprozessor 10 enthalten. Diesen Einrichtungen 31 ist gemeinsam, daß elektromagnetische Störungen 35 auftreten können, welche den Mikroprozessor 10 oder beispielsweise die Überwachungseinrichtung 24 beeinflussen. Erfindungsgemäß ist eine unterschiedliche Reaktion auf ein Auftreten des Resetsignals 23 in Abhängigkeit vom Zustand der Einrichtung 31 vorgesehen, das die Überwachungseinrichtung 24 an den Mikroprozessor 10 abgibt. Das Resetsignal 23 tritt beispielsweise auf, wenn das erste Eingangssignal 26, das der Mikroprozessor 10 an die Überwachungseinrichtung 24 abgibt, nicht mehr korrekt vorliegt. Eine andere Möglichkeit, das Resetsignal 23 auszulösen, bietet das zweite Eingangssignal 27, das beispielsweise von einer nicht näher gezeigten Stromversorgungsschaltung bereitgestellt wird, die mit dem zweiten Eingangssignal 27 eine Inbetriebnahme signalisiert, die zum Auslösen des Resetsignals 23 führt.

Die Einrichtungen 31, die den Mikroprozessor 10 enthalten, können Zustände aufweisen, in denen der Mikroprozessor 10 nur bestimmte Zustandsänderungen auslösen darf. Bei einer als Verstellantrieb realisierten Einrichtung 31 entspricht der Zustand vorzugsweise einer Position des Verstellantriebs 31, die das Positionssignal 12 wiedergibt. Bei einem Verstellantrieb als Beispiel einer Einrichtung 31 kann demnach in Abhängigkeit vom Positionssignal 12 ein unterschiedlicher Programmablauf bei einem Auftreten des Resetsigals 23 vorgesehen sein.

Der Vergleicher 13 vergleicht das Positionssignal 12 mit einem, vorzugsweise mit mehreren Schwellenwerten 14, 15, die der Schwellenwertgeber 16 bereitstellt. Der wenigstens eine Schwellenwert 14, 15 entspricht bei einem Verstellantrieb 31 beispielsweise einer dem Endanschlag 34 entsprechenden Position oder einer Position in der Nähe des Endanschlags 34. Mit mehreren Schwellenwerten 14, 15 können auf einfache Weise ein oder mehrere Positionsbereiche vorgegeben werden. In Abhängigkeit vom Vergleichsergebnis gibt der Vergleicher 13 das wenigstens eine Vergleichssignal 17, 18 an die Programmauswahl 19 weiter, die den unterschiedlichen Programmablauf bei einem Auftreten des Resetsignals 23 festlegt. Die Programmauswahl 19 gibt beispielsweise unterschiedliche Sprungadressen an die Resetverwaltung 21 ab. Ein Resetsignal 23 veranlaßt den Mikroprozessor im allgemeinen zum Anspringen einer fest vorgegebenen Adresse, an der der neue Befehl geholt wird. Der Befehl ist durch das erste Auswahlsignal 20 festgelegt, das beispielsweise die unterschiedlichen Sprungadressen vorgibt.

Als unterschiedlicher Programmablauf kann vorgesehen sein, daß zum einen eine vollständige Initialisierung des Mikroprozessors 10 sowie ein Kalibrierlauf des Verstellantriebs 31 vorgesehen sind, bei dem der Verstellantrieb einen vollständigen Bewegungszyklus zwischen Endanschlägen 34 durchführt, um aufgrund des inkrementellen Positionssignals 33 in der Positionsermittlung 11 die tatsächliche Position zu ermitteln. Zum anderen kann vorgesehen sein, daß zumindest der Kalibrierlauf des Verstellantriebs 31 innerhalb von ausgewählten Positionsbereichen, beispielsweise in der Nähe der Endanschläge 34, unterbleibt.

Bei einer als Verstellantrieb ausgebildeten Einrichtung 31 muß insbesondere bei dem Erreichen eines Endanschlags 34 mit erhöhten elektromagnetischen Störungen 35 gerechnet werden, da der Elektromotor 30 beim Erreichen eines der Endanschläge 34 einen erhöhten Strom zieht, der bis zum Blockierstrom ansteigen kann. Aufgrund des erhöhten Stroms gehen von dem den Elektromotor 30 enthaltenden Stromkreis sowie gegebenenfalls vom Elektromotor 30 selbst eine erhöhte elektromagnetische Störstrahlung 35 aus, die zu Störungen im Mikroprozessor 10 oder in der Überwachungseinrichtung 24 führen können.

Eine vorteilhafte Weiterbildung sieht den Einsatz der Zählanordnung 25 vor, die die Anzahl der aufgetretenen Resetsigale 23 zählt. Nach Erreichen einer vorgegebenen Anzahl von Resetsignalen 23 gibt die Zähleranordnung 25 das zweite Auswahlsignal 22 an die Resetverwaltung 21 ab. Das zweite Auswahlsignal 22 hat Vorrang gegenüber dem ersten Auswahlsignal 20 und legt einen gegebenenfalls anderen Programmablauf fest. Mit dieser Maßnahme wird die Sicherheit der gesamten Schaltung erhöht, die dadurch beeinträchtigt sein könnte, daß die bei den bestimmten Zuständen der Einrichtung 31 gehäuft auftretenden elektromagnetischen Störungen 35, die zum Bereitstellen des Auswahlsignals 20 geführt haben, sogar die Positionsermittlung 11 gestört haben. In diesem Betriebszustand legt das zweite Auswahlsignal 22 fest, daß eine vollständige Initialisierung des Rechenbausteins 10 und insbesondere ein Kalibrierlauf des Verstellantriebs 31 veranlaßt werden.

## Patentansprüche

1. Schaltung zum Betreiben von Rechenbausteinen (10), insbesondere Mikroprozessoren (10), mit wenigstens einer Rücksetzeinrichtung, die aufgrund von Störungen (35) ein Resetsignal (23) an den Rechenbaustein (10) abgibt, mit einem unterschiedlichen Programmablauf im Rechenbaustein (10) nach einem aufgetretenen Resetsignal (23), der in Abhängigkeit von einem Vergleichssignal (18) festgelegt ist, das ein Vergleicher (13) bereitstellt, **dadurch gekennzeichnet, daß** der Vergleicher (13) ein Signal (12) mit wenigstens einem Schwellenwert (14, 15) vergleicht, das einen Zustand einer Einrichtung (31) widerspiegelt, die mit dem Rechenbaustein (10) zusammenwirkt.

2. Schaltung nach Anspruch 1, **dadurch gekennzeichnet, daß** als Einrichtung (31) ein elektromotorisch betätigter Verstellantrieb vorgesehen ist.

3. Schaltung nach Anspruch 2, **dadurch gekennzeichnet, daß** der Vergleicher (13) ein der Position des Verstellantriebs (31) entsprechendes Positionssignal (12) mit dem wenigstens einen Schwellenwert (14, 15) vergleicht.

4. Schaltung nach Anspruch 2, **dadurch gekennzeichnet, daß** der Verstellantrieb (31) in der Karosserie eines Kraftfahrzeugs angeordnet ist.

5. Schaltung nach Anspruch 2, **dadurch gekennzeichnet, daß** der Verstellantrieb (31) in der Kraftstoffzumessung einer Brennkraftmaschine eines Kraftfahrzeugs angeordnet ist.

6. Schaltung nach Anspruch 1, **dadurch gekennzeichnet, daß** eine Zähleranordnung (25) vorgesehen ist, die die Anzahl der Resetsignale (23) zählt und bei einer vorgegebenen Anzahl ein Auswahlsignal (22) bereitstellt, das den Programmablauf im Rechenbaustein (10) ändert.

7. Schaltung nach Anspruch 2, **dadurch gekennzeichnet, daß** innerhalb wenigstens eines vorgegebenen Positionsbereichs des Verstellantriebs (31) beim Auftreten eines Resetsignals (23) ein Kalibrierlauf vorgesehen ist, bei dem der Verstellantrieb (31) einen zwischen Endanschlägen (34) liegenden vollständigen Bewegungszyklus durchfährt.

8. Schaltung nach Anspruch 7, **dadurch gekennzeichnet, daß** der Kalibrierlauf bei einem Auftreten des Vergleichssignals (17, 18) unterdrückt ist.

9. Schaltung nach Anspruch 2, **dadurch gekennzeichnet, daß** mit dem wenigstens einen Schwellenwert (14, 15) eine Position vorgegeben wird, die zumindest in der Nähe von wenigstens einem Endanschlag (34) liegt.

## Claims

1. Circuit for operating arithmetic modules (10), particularly microprocessors (10), having at least one reset device which outputs a reset signal (23) to the arithmetic module (10) on account of faults (35), having a different program sequence in the arithmetic module (10) after a reset signal (23) has occurred, said program sequence being stipulated on the basis of a comparison signal (18) provided by a comparator (13), **characterized in that** the comparator (13) compares a signal (12) with at least one threshold value (14, 15), said signal reflecting a state of a device (31) interacting with the arithmetic module (10).

2. Circuit according to Claim 1, **characterized in that** the device (31) provided is an electromotively actuated adjusting mechanism.

3. Circuit according to Claim 2, **characterized in that** the comparator (13) compares a position signal (12) corresponding to the position of the adjusting mechanism (31) with the at least one threshold value (14, 15).

4. Circuit according to Claim 2, **characterized in that** the adjusting mechanism (31) is arranged in the bodywork of a motor vehicle.

5. Circuit according to Claim 2, **characterized in that** the adjusting mechanism (31) is arranged in the fuel metering system of an internal combustion engine in a motor vehicle.

6. Circuit according to Claim 1, **characterized in that** a counter arrangement (25) is provided which counts the number of reset signals (23) and, at a prescribed number, provides a selection signal (22) which changes the program sequence in the arithmetic module (10).

7. Circuit according to Claim 2, **characterized in that** a calibration pass is provided within at least one prescribed positional range of the adjusting mechanism (31) when a reset signal (23) occurs, said calibration pass involving the adjusting mechanism (31) travelling through a complete motion cycle situated between end stops (34).

8. Circuit according to Claim 7, **characterized in that** the calibration pass is suppressed if the comparison signal (17, 18) occurs.

9. Circuit according to Claim 2, **characterized in that** the at least one threshold value (14, 15) is used to prescribe a position which is situated at least close to at least one end stop (34).

## Revendications

1. Circuit de mise en oeuvre de composants de calculs (10) (modules informatiques), notamment de microprocesseurs (10), comprenant au moins une installation de remise à l'état initial qui par suite de perturbations (35) fournit un signal de remise à l'état initial (23) au composant de calcul (10), avec un déroulement différent de programme dans le composant de calcul (10), après la réception d'un signal de remise à l'état initial (23) qui est fixé en fonction d'un signal de comparaison (18) fourni par un comparateur (13),
**caractérisé en ce que**
le comparateur (13) compare un signal (12) à au moins un seuil (14, 15), ce signal (12) représentant un état d'une installation (31) coopérant avec le composant (10).

2. Circuit selon la revendication 1,
**caractérisé en ce que**
l'installation (31) est un actionneur à moteur électrique.

3. Circuit selon la revendication 2,
**caractérisé en ce que**
le comparateur (13) compare un signal de position (12) correspondant à la position de l'actionneur (31) à au moins un seuil (14, 15).

4. Circuit selon la revendication 2,
**caractérisé en ce que**
l'actionneur (31) équipe la carrosserie d'un véhicule automobile.

5. Circuit selon la revendication 2,
**caractérisé en ce que**
l'actionneur (31) est associé au dosage du carburant d'un moteur à combustion interne d'un véhicule automobile.

6. Circuit selon la revendication 1,
**caractérisé par**
un compteur (25) qui compte le nombre de signaux de remise à l'état initial (23), et qui pour un nombre prédéterminé fournit un signal de sélection (22) qui modifie le déroulement du programme dans le composant de calcul (10).

7. Circuit selon la revendication 2,
**caractérisé en ce qu'**
au moins une plage de position prédéterminée de l'actionneur (31) prévoit une marche de calibrage lorsque se produit un signal de remise à l'état initial (23), marche de calibrage pour laquelle l'actionneur (31) exécute un cycle de mouvement entre les butées de fin de course (34).

8. Circuit selon la revendication 7,
**caractérisé en ce que**
la marche de calibrage est supprimée lorsque se produit le signal de comparaison (17, 18).

9. Circuit selon la revendication 2,
**caractérisé en ce qu'**
il prédétermine une position par au moins un seuil (14, 15) situé à proximité d'au moins une butée de fin de course (34).
